# EUROPÄISCHE PATENTSCHRIFT

(11) **EP 0 919 088 B1**
(45) Veröffentlichungstag und Bekanntmachung des Hinweises auf die Patenterteilung: **08.08.2001**
(21) Anmeldenummer: 98924001.5
(22) Anmeldetag: 10.03.1998
(51) Int. Cl.: H04L 12/00

(54) **STEUER- UND ANZEIGEVORRICHTUNG FÜR DEN E-MAIL DIENST**
CONTROL AND INDICATION DEVICE FOR AN E-MAIL SERVICE
DISPOSITIF DE COMMANDE ET DE NOTIFICATION POUR SERVICE DE COURRIER ELECTRONIQUE

(30) Priorität: 18.03.1997 DE 29718348 U; 25.10.1997 DE 19747200
(43) Veröffentlichungstag der Anmeldung: 02.06.1999
(73) Patentinhaber: Caw Electronic Gmbh, 89312 Günzburg (DE)
(72) Erfinder: WASCHEK, Bernd, D-89312 Günzburg (DE); KRONWITTER, Tobias, D-80339 München (DE)
(74) Vertreter: Binder, Armin
(86) Internationale Anmeldenummer: DE9800746
(87) Internationale Veröffentlichungsnummer: WO9842100

(56) Entgegenhaltungen:
- EP-A- 0 736 989
- WO-A-97/17765
- US-A- 5 758 081
- PATENT ABSTRACTS OF JAPAN vol. 017, no. 707 (P-1667), 24. Dezember 1993 & JP 05 241992 A (NEC CORP), 21. September 1993

## Beschreibung

Die Erfindung betrifft eine Steuer- und Anzeigevorrichtung für den Empfang von elektronischer Post und ein entsprechendes Verfahren.

Es ist allgemein bekannt und wird in den entsprechenden Bedienungsanleitungen der Dienstanbieter für elektronische Post, wie zum Beispiel t-online, AOL oder Compuserve beschrieben, daß die von einem Versender an einen Adressaten versandte elektronische Post (E-mail) nicht direkt zum Nutzer gelangt, sondern dem Provider übermittelt wird. Bei diesem Provider wird die E-mail auf einem Speichermedium derart zwischengelagert, daß sie vom Nutzer (Adressaten) abgerufen werden kann.

In der täglichen Nutzung von E-mail entsteht das Problem, daß der Adressat der E-mail vom Zeitpunkt des Eingangs der elektronischen Post keine Kenntnis hat. Es ist also notwendig, daß er in regelmäßigen Abständen sich mit dem Provider in Verbindung setzt, um zu überprüfen, ob an seine Adresse eine E-mail vorliegt. Erwartet er eine dringende Nachricht, so muß er mit entsprechend hoher Frequenz diese Nachfrage durchführen, um keine zu große Zeit zwischen dem Eingang der Nachricht an ihn beim Provider und seiner Kenntnisnahme zu versäumen. Es kann auch vorkommen, daß Nachrichten, die auf dem elektronischen Wege an einen Adressaten versandt werden, über längere Zeit hinweg nicht zur Kenntnis des Adressaten gelangen. Hierdurch wird die Übersendung wichtiger, dringender oder fristgebundener Nachrichten an einen Empfänger, insbesondere einen Empfänger der nur sporadisch mit dem elektronischen Netz verbunden ist, zu einer unsicheren Angelegenheit.

Aus der Europäischen Patentanmeldung EP 0 736 989 A2 ist eine Steuer- und Anzeigevorrichtung für den Empfang von elektronischer Post - einschließlich eines entsprechenden Verfahrens - bekannt, wobei diese Vorrichtung automatisch die elektronische Post abholt und in einem Computer speichert.

Der Nachteil einer derartigen Vorrichtung liegt darin, daß einerseits der Computer ständig eingeschaltet sein muß und damit erhöhter Energieverbrauch und Verschleiß eintritt, und andererseits beim Abholen der elektronischen Post unkontrolliert auf den Computer zugegriffen werden kann, ohne daß der Besitzer eine Eingriffsmöglichkeit hat. Weiterhin wurde in der genannten Schrift keine Angabe zur Verwirklichung der Vorrichtung mit den Besonderheiten in einem ISDN-Telekommunikationssystem gemacht.

Es ist die Aufgabe der Erfindung, einerseits eine Steuer- und Anzeigevorrichtung für ein ISDN-Telekommunikationssystem zu beschreiben, welche den Adressaten aktiv auf das Vorhandensein einer elektronischen Nachricht hinweist, ohne daß ein Computer eingeschaltet sein muß, und andererseits ein entsprechendes Verfahren aufzuzeigen.

Die Aufgabe der Erfindung wird durch die Merkmale der jeweils unabhängigen Ansprüche gelöst.

Demgemäß schlagen die Erfinder vor eine an sich bekannte Vorrichtung zur Anzeige des Vorliegens einer elektronischen Nachricht bei einem Provider, mit: einem Mittel zur Speicherung mindestens einer vorgegebenen Kennung eines Providers, einem Mittel zum Vergleich der mindestens einen vorgegebenen Kennung mit einer Kennung eines einkommenden Signals, und einem Mittel zur optischen oder akustischen Anzeige, oder zur Auslösung eines Ereignisses im Falle eines Übereinstimmens der mindestens einen vorgegebenen Kennung und der eingehenden Kennung, dahingehend zu verbessern, daß die Vorrichtung einen Anschluß an ein ISDN-Telekommunikationsnetz mit einem Datenkanal (=D-Kanal) und mindestens einem Nutzkanal (=B-Kanal) aufweist, eine ISDN-Anschaltung mit einem D-Kanal-Kontroller ,zur Dekodierung der Kennung des Providers im eingehenden D-Kanal, vorgesehen ist, wobei außerdem Mittel zur Unterdrückung einer Anrufsignalisierung vorgesehen sind.

Weitere vorteilhafte Ausgestaltungen werden in den Unteransprüchen 2 bis 5 beschrieben.

Entsprechend dem grundlegenden Erfindungsgedanken schlagen die Erfinder auch vor, das bekannte Verfahren gemäß dem Oberbegriff des Anspruches 6 dahingehend zu verbessern, daß das Telekommunikationsnetz ein ISDN-Netz mit einem Datenkanal (=D-Kanal) und mindestens einem Nutzkanal (=B-Kanal) ist und zur Bestimmung der Telefonnummer des einkommenden Anrufs eine ISDN-Anschaltung mit D-Kanal-Kontroller verwendet wird, wobei die Telefonnummer aus dem Datenkanal ausgelesen wird, wobei jedoch gleichzeitig eine Anrufsignalisierung, allgemein auch als Klingelzeichen bezeichnet, unterdrückt wird.

Weitere vorteilhafte Ausgestaltungen werden in den Unteransprüchen 7 bis 10 beschrieben.

Durch die Erfindung lassen sich die folgenden Vorteile erreichen:

Der Nutzer erhält sofort mit dem Eingang einer E-mail ein optisches oder akustisches Signal, daß diese für ihn eingegangen ist beziehungsweise vorliegt.

Die E-mail kann jetzt, wie bei der Kommunikation mittels eines Fax-Gerätes üblich, sofort ohne jegliche Verzögerung abgerufen und ohne Zeitverlust bearbeitet werden.

Der Nutzer muß nicht wie heute üblich mehrmals täglich den Computer starten und seinen Provider anwählen, um zu erfahren, ob eine E-mail für ihn vorliegt. So wird unnötiger Zeit- und Kostenaufwand vermieden und außerdem erhält der Nutzer immer eine optimale, zeitnahe Information über seinen E-mail Eingang.

Die Steuer- und Anzeigevorrichtung kann bei Bedarf auch automatisch den Computer und den Anwählvorgang starten und dann die E-mail selbständig laden beziehungsweise abholen.

Die Steuer- und Anzeigevorrichtung kann auch mit einer entsprechenden Schaltung ergänzt sein, womit es möglich ist, E-mail ohne verbundenen Computer direkt mittels eines entsprechenden Druckers auszudrucken.

Mittels einer einfachen Software, die einen automatischen Anwählvorgang zum betroffenen Nutzer startet, muß der Provider die dafür nötigen logistischen und technischen Voraussetzungen schaffen. Durch diese Maßnahmen hat er jedoch deutliche Wettbewerbsvorteile gegenüber den anderen Mitbewerbern, die sich nicht diesem Service bedienen.

Der Provider sendet seine Rufnummer/Kennung aus, welche von der Steuer- und Anzeigevorrichtung ausgewertet beziehungsweise erkannt wird. Vorzugsweise nutzt der Provider in diesem Fall die Möglichkeit, das erste Klingelzeichen bei der Anwahl zu unterdrücken, damit der Schaltung genügend Zeit zur Auswertung verbleibt und bis zum Eintreffen des zweiten Klingelzeichens dieses dann unterdrücken kann. Dies ist besonders notwendig, wenn unter der gleichen Rufnummer auch andere TAE-Endgeräte benutzt werden.

Die Steuer- und Anzeigevorrichtung kann auch eine weitere Schaltung beinhalten, die eine oder mehrere Rufnummern von Anrufen zwischenspeichert, beziehungsweise mittels eines zusätzlichen Displays anzeigt.

Hierdurch bekommt der Nutzer über die Steuer- und Anzeigevorrichtung den zusätzlichen Nutzen, die auf gleicher Leitung eingehenden Anrufe zu identifizieren, ohne ein ISDN-Telefon mit Anzeigedisplay benutzen zu müssen.

Es versteht sich, daß die vorstehend genannten und nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnungen. Im übrigen wird auf die technischen Informationsschriften zum ISDN-Netz und zum digitalen Telefonnetz, insbesondere das Zeichnungssystem für ISDN-Teilnehmerleitungen (DSS1, früher als D-Kanal Protokoll bezeichnet) zwischen den Vermittlungsstellen und den Endeinrichtungen, sowie die relevanten CCIT-Empfehlungen (Blaubuch), hingewiesen und deren Offenbarungsgehalt vollinhaltlich mit in die Anmeldung einbezogen ist.

Die Erfindung soll nun anhand der Ausführungsbeispiele und den Zeichnungen näher erläutert werden.
- Figur 1 + 2:: Ansichten einer beispielhaften Steuer- und Anzeigenvorrichtung;
- Figur 3 + 4:: Blockschaltbilder von erfindungsgemäßen Steuer- und Anzeigevorrichtungen;
- Figur 5:: Schematische Darstellung einer Integration der Steuer- und Anzeigevorrichtung im ISDN-Netz;
- Figur 6:: Schematische Darstellung einer Integration der Steuer- und Anzeigevorrichtung im ISDN-Netz mit Anbindung an einen Personal Computer;
- Figur 7:: Schematische Darstellung einer Integration der Steuer- und Anzeigevorrichtung im ISDN-Netz mit Anbindung an ein PC-Netzwerk.

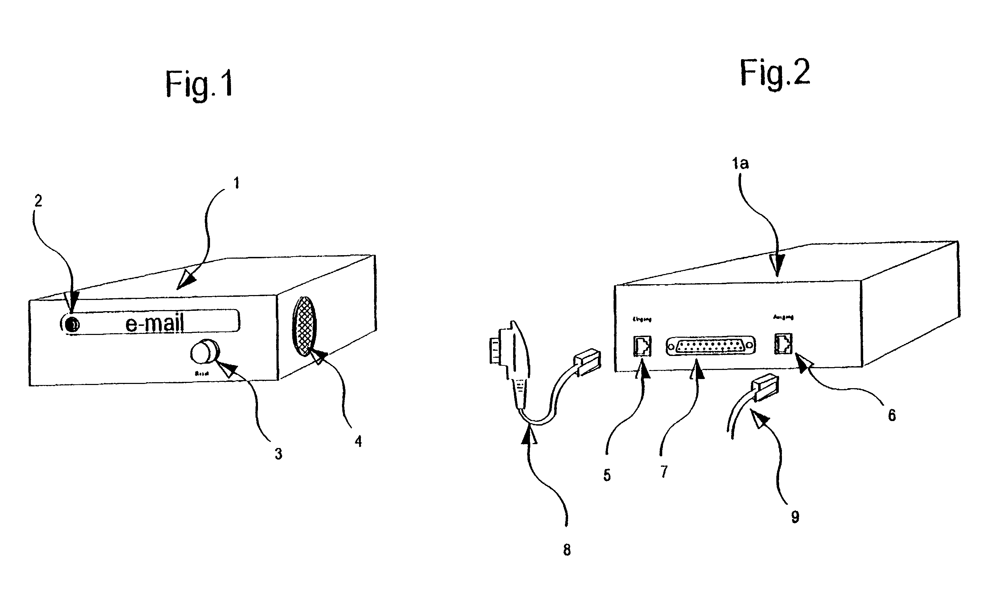

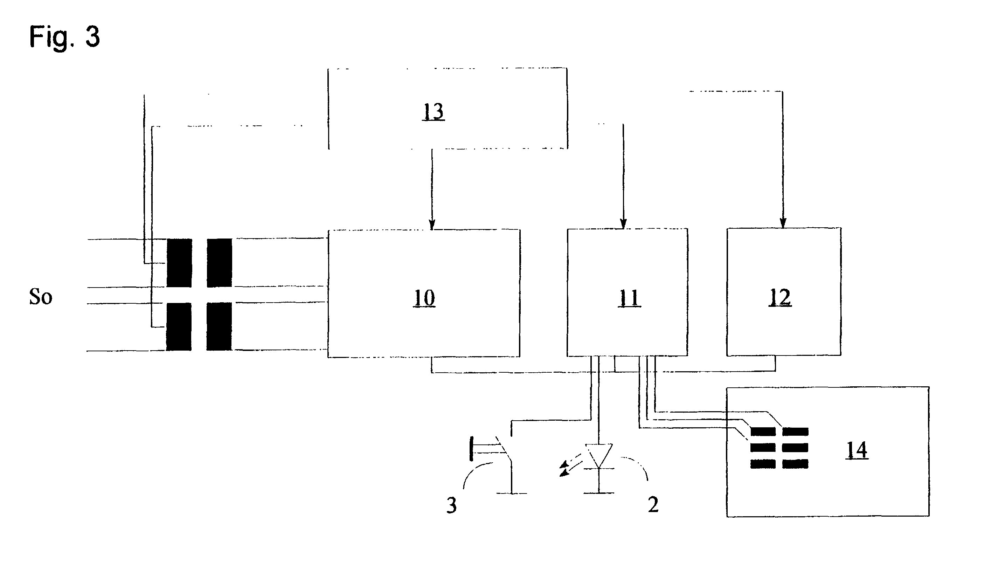

Die Figuren 1 und 2 zeigen eine Vorder- und eine Rückansicht einer erfindungsgemäßen Steuer- und Anzeigevorrichtung 1. In der Vorderansicht ist die Leuchtanzeige 2, die zum Beispiel aus einer LED-Diode oder einer Lampe bestehen kann, und ein Reset-Taste 3 zu erkennen. Seitlich ist ein Schallwandler 4 zu sehen, durch den zusätzlich oder anstelle der Leuchtanzeige das Signal für den Eingang einer E-mail ausgegeben wird.

In der Rückansicht ist ein beispielhaft dargestelltes Anschlußkabel 8 zu einer TAE-Dose des deutschen Telefonnetzes zu sehen. Auf der Rückseite der Anzeige- und Steuervorrichtung ist der Eingang 5 und der Ausgang 6 für den Telefonanschluß dargestellt. Hierdurch kann die dargestellte Steuer- und Anzeigevorrichtung 1 auch als Zwischenglied zwischen einer Haussteckdose und einem Modem, PC, Fax, Telefon oder einem sonstigen Endgerät der Telekommunikation genutzt werden. Zusätzlich ist auch ein Anschluß an einen PC, Drucker oder Fax vorgesehen, so daß zum Beispiel auch die Zeiten der E-mail-Meldungen und/oder die Kennungen der Provider schriftlich ausgegeben werden können.

Die Figur 3 zeigt ein beispielhaftes Blockschaltbild einer erfindungsgemäßen Steuer- und Anzeigevorrichtung an Hand eines ISDN-Rufmelders. Dieser Rufmelder besteht im wesentlichen aus einer ISDN-Anschaltung mit D-Kanal-Kontroller, bestehend aus einem an sich bekannten ISAC-S-Baustein 10, einem Mikroprozessor 11 mit einem separaten Speicherbaustein 12 in Form eines EPROMs und einer Stromversorgung 13 zur Speisung über den So-Bus. Zusätzlich kann auch eine Schnittstelle zu einer Chip-Karte 14 genutzt werden, um zum Beispiel Kennungsinformationen, Rufnummern oder Zeitbegrenzungen variabel einzulesen.

Der ISAC-S-Baustein 10 ist allgemein bekannt und wird beispielsweise von der Firma Siemens unter der Bezeichnung "PSB 2186 ISAC-S TE" vertrieben. In diesem Zusammenhang wird auf die Firmenschriften von Siemens zu oben genanntem Bauelement verwiesen und deren Offenbarungsgehalt vollinhaltlich in diese Anmeldung mit aufgenommen.

Dieser ISDN-Rufmelder 1 beobachtet die Meldungen im D-Kanal eines ISDN-Basisanschlusses und registriert das Auftreten eines Rufes von einer voreingestellten ISDN-Rufnummer, das heißt das Auftreten einer bestimmten, im ISDN-Protokoll vorhandenen und bei der Anwahl eines beliebigen Endgerätes übermittelten "Origination-Address" (= vom ISDN-Netz übermittelte Anschlußnummer des Anrufenden).

Die Rufnummer wird mittels einer Speicher-Chip-Karte 14 eingestellt, die in den ISDN-Rufinelder 1 eingeschoben wird. Es ist möglich den Mikroprozessor so zu programmieren, daß er nur mit eingeschobener Chip-Karte betriebsbereit, oder nur über eine bestimmte Zeitspanne oder einen vorgegebenen Datumsbereich funktioniert. Auf diese Weise ist es leicht möglich die Nutzung des Rufinelders zu berechnen.

Beim Auftreten eines Rufes von der eingestellten ISDN-Rufnummer beginnt die eingebaute LED 2 zu blinken oder zu leuchten, bis sie über die Bestätigungs- oder Reset-Taste 3 vom Nutzer wieder zurückgesetzt wird.

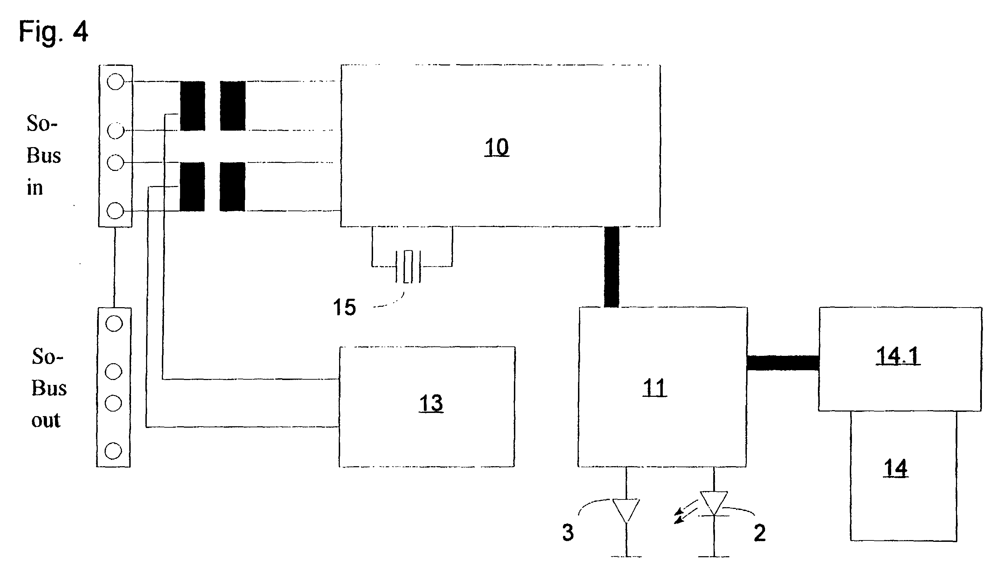

Ein ähnliches ebenfalls beispielhaftes Blockschaltbild einer erfindungsgemäßen Steuer- und Anzeigevorrichtung 1 ist in der Figur 4 dargestellt. Auch hier ist ein Anschluß zum ISDN-So-Bus gezeigt, der mit einer ISDN-Anschaltung 10 mit D-Kanal-Kontroller in Form eines handelsüblichen ISAC-Bausteins verwirklicht wird. Die ISDN-Anschaltung ist mit einem Oszillator-Quarz verbunden und gibt ihre dekodierten Informationen an einen Mikroprozessor 11, einen handelsüblichen 8032/ST6203 mit 256byteRAM und internem oder externem ROM, weiter. Im Mikroprozessor 11 wird die einkommende Information aus jedem ankommenden Anruf verarbeitet und im Falle einer vorbekannten Rufnummer des Anrufes angezeigt, daß eine E-mail für den Adressaten vorliegt. Die Rufnummer oder auch sonstige Kennungen werden dem Mikroprozessor 11 über das Chip-Karten-Terminal 14.1 und die dort eingesteckte Chip-Karte 14 eingegeben.

Erfindungsgemäß kann mit einer derartigen Vorrichtung auch von der Provider-Seite eine Rücksetzung des angezeigten Signals vorgenommen werden, indem zum Beispiel durch einen Anruf mit einer anderen vorbekannten Rufnummer dem Mikroprozessor 11 ein Signal für die Rücksetzung gegeben wird.

Ebenso ist es auch möglich im Mikroprozessor eine Zählung der Anrufe vorzunehmen und damit die Anzahl der vorliegenden Nachrichten über ein entsprechendes Zahlen-Display anzuzeigen. Auch ist es möglich beim Eingang einer E-mail durch ein Steuersignal einen mit der Anzeigevorrichtung verbundenen PC zu starten und/oder eine automatisch gesteuerte Verbindung zum Provider herzustellen und die vorliegende E-mail abzuholen. Weiterhin können bei einem Alpha-Numerischen-Display auch Nachrichten angezeigt werden, die über das Telekommunikationnetz übertragen wurden. Die Übertragung und Anzeige bestimmter Nachrichten kann auch dadurch geschehen, daß - im Falle des ISDN - eine Subadressierung auf dem D-Kanal mit übertragen wird, deren Kennzahlen mit einer vorgegebenen Liste mit Texten in der Steuervorrichtung verglichen wird, wobei die Bedeutung der Kennzahlen/Subadressen im Klartext auf dem Display angezeigt wird.

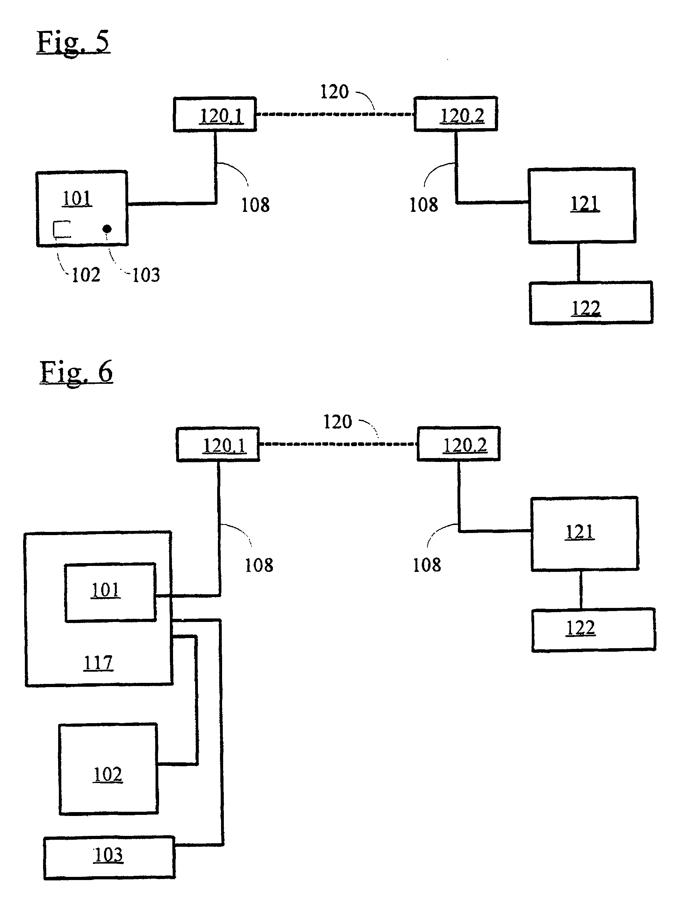

In den Figuren 5 bis 7 sind drei Anwendungsbeispiele der erfindungsgemäßen Steuer- und Anzeigevorrichtung gezeigt. Die Figur 5 zeigt eine schematische Darstellung einer erfindungsgemäßen Steuer- und Anzeigevorrichtung im Zusammenhang mit einem ISDN-Netz und den Geräten eines Providers. Der Provider verfügt über einen E-mail-Server 122, der über entsprechende Speicherkapazitäten verfügt, um die eingehende elektronische Post zu speichern. Sobald eine elektronische Post für einen bestimmten Adressaten eingegangen ist, übergibt der E-mail-Server den Dial-Server (Wähl-Server) die Aufgabe über die So-Anschlußstelle (NTBA) 120.2, des ISDN-Netzes 120, die So-Anschlußstelle (NTBA) 120.1 des Empfängers anzuwählen. Es ist selbstverständlich, daß die dargestellte Verbindung des ISDN-Netzes zwischen zwei So-Anschlußstellen nur einen kleinen Ausschnitt aus dem ISDN-Netz darstellt. Tatsächlich verläuft eine Verbindung zwischen zwei Anschlußstellen über ein stark verzweigtes Netz mit diversen Knotenpunkten und Leitungen. Aus Übersichtlichkeitsgründen wurde auf diese Darstellung verzichtet.

Die So-Anschlußstelle (NTBA) 120.1 des Empfängers ist über eine Leitung 108 mit der Steuer- und Anzeigevorrichtung 101 verbunden. Bei einem eingehenden Anruf überprüft die Steuer- und Anzeigevorrichtung die Kennung beziehungsweise die Nummer des Anrufenden und entscheidet, ob diese Kennung mit einer gespeicherten Kennung übereinstimmt. Liegt eine Übereinstimmung vor, so wird über das Display 102 das Vorliegen einer elektronischen Post an den Empfänger angezeigt. Alternativ oder zusätzlich kann auch ein akustisches oder sonstiges Signal gegeben werden oder auch ein beliebiges elektronisches Gerät gestartet werden. Mit Hilfe der "Reset"-Taste 103 kann die Anzeige 102 wieder gelöscht werden.

Es ist auch möglich, daß die Anzeige 102 einen Zähler aufweist, der bei mehreren eingegangenen Nachrichten über das Vorliegen elektronischer Post die Anzahl der eingegangenen Nachrichten angezeigt. In diesem Fall wird durch den "Reset"-Taste 103 die angezeigte Zahl der Nachrichten auf "0" gesetzt.

Ist das Display 102 als alphanumerisches Display ausgelegt, so können zusätzliche Nachrichten, die über einen oder mehrere ISDN-Kanäle des ISDN-Netzes weitergegeben werden, angezeigt werden. Auch kann im Steuergerät eine elektronische Liste vorliegen, die bestimmte Kennungen bestimmten Texten oder Aktionen zuordnet, so daß vorgegebene Texte wiedergegeben werden oder auch je nach mitgeteilter Kennung unterschiedliche Schalter betätigt werden.

Eine andere, fortentwickelte Ausführung der automatischen E-mail-Meldung ist in der Figur 6 dargestellt Auf der Seite des Providers bis zum ISDN-Anschluß besteht die gleiche Ausstattung wie in der Figur 5, jedoch ist hier die Steuer- und Anzeigevorrichtung 101 in einen Personal-Computer (PC) integriert. Dies kann beispielsweise in Form einer normgerechten Einsteckkarte ausgeführt werden, allerdings kann das Steuergerät auch in einem "Motherboard" integriert werden.

Die hier als Einsteckkarte ausgebildete Steuer- und Anzeigevorrichtung 101 ist über eine Telefonleitung 108 und einer So-Anschlußstelle mit dem ISDN-Netz verbunden und verfährt beim Eingehen einer Nachricht über das ISDN-Netz wie in der Figur 5 grundsätzlich beschrieben. Jedoch wird als Anzeigeeinrichtung der normale Monitor des Computers benutzt, indem z.B. beim Vorliegen einer Nachricht ein "Fenster" am Anzeigemonitor 102 aufgeht und dem Benutzer mitteilt, daß eine E-mail-Nachricht vorliegt. Es besteht auch die Möglichkeit, daß diese E-mail-Nachricht automatisch über den PC abgerufen wird, indem durch die Steuervorrichtung im PC ein Programm startet, welches das Abholen der Nachricht durchführt. Hierdurch kann ohne ein Eingreifen des PC-Benutzers anstelle der Anzeige des Vorliegens einer Nachricht die Nachricht selbst auf dem Anzeigemonitor dargestellt oder auch sofort über einen angeschlossenen Drucker ausgedruckt werden. Die Rücksetzung (Reset) der Anzeige erfolgt vorzugsweise über eine Eingabe an der Eingabetastatur 103, kann jedoch auch durch den Provider selbst ausgelöst werden, der hierzu mit einer anderen, vorbestimmten Rufnummer, Subadresse oder einer sonstigen übermittelten Kennung die Steuervorrichtung anrufen muß.

Es ist ebenso möglich, daß zusätzlich zum Monitor ein weiteres Display im Sichtbereich des PC-Benutzers installiert wird, so daß der Empfang und die Anzeige einer Nachricht, über das Vorliegen einer elektronischen Post, erfolgen kann, ohne daß der PC 117 eingeschaltet sein muß. Dies bedingt allerdings, daß entweder der PC 117 ständig in Betrieb ist oder zumindest für die als Steckkarte ausgebildete Steuervorrichtung 101 eine getrennte Stromversorgung vorliegt. Damit wird die Steuervorrichtung durch das Ausschalten des PC's nicht beeinträchtigt und eventuell ankommende Informationen werden in der Steuervorrichtung gespeichert bis der PC 117 eingeschaltet wird und die Informationen auslesen kann.

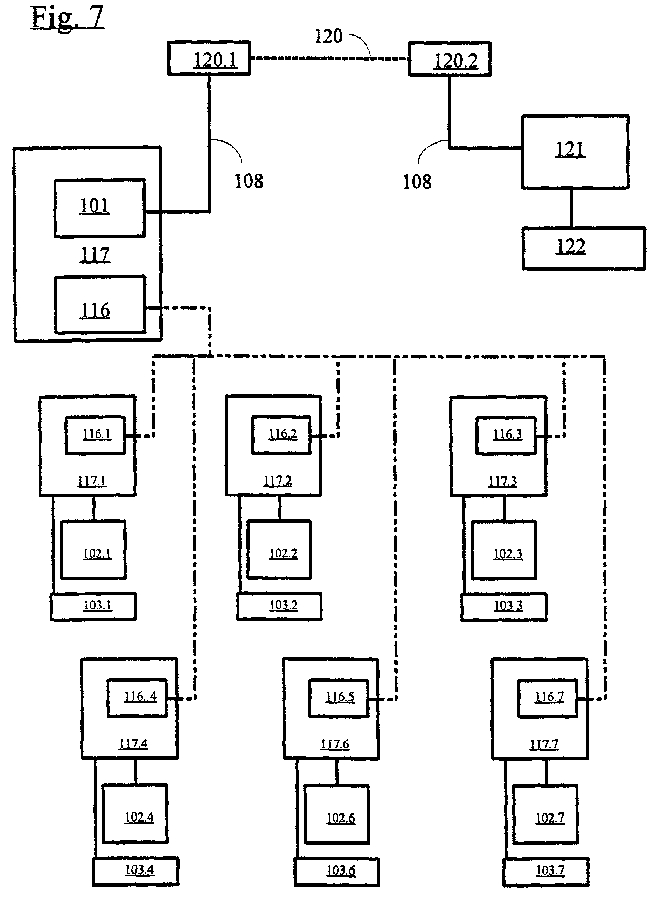

In der Figur 7 ist eine Weiterbildung der Anwendung aus der Figur 6 dargestellt. In diesem Fall stellt der PC 117 einen Benachrichtigungs-Server innerhalb eines lokalen Netzwerkes dar. Es muß sich dabei nicht um den eigentlichen Daten-Server des Netzes handeln, es kann auch ein beliebiger Arbeitsplatz im Netz sein, der jedoch die Aufgabe der Verbindung zum ISDN-Netz übernimmt.
Der Benachrichtigungs-Server 117 erhält über das ISDN-Netz die Nachricht über die integrierte Steuer- und Anzeigevorrichtung 101 und gibt die Nachricht, über das Vorliegen einer E-mail, an alle Arbeitsplätze 117.1 bis 117.7 oder einen bestimmten Arbeitsplatz im Netzwerk weiter. Wird dem Benachrichtigungs-Server 117 mit der Nachricht vom Provider eine zusätzliche Kennung oder Unterkennung mitgeteilt und ist dem Server bekannt welchem Arbeitsplatz-PC diese zusätzliche Kennung zugeordnet ist, so kann der Benachrichtigungs-Server 117 die Nachricht, über das Vorliegen einer E-mail, auch direkt an einen bestimmten PC innerhalb des Netzwerkes weitergeben. Der entsprechende Adressat kann dann entscheiden, ob die E-mail abgeholt werden soll und diese Entscheidung an den Benachrichtigungs-Server 117 weitergeben oder selbst eine entsprechende Aktion einleiten.

Es ist in dieser Konfiguration allerdings auch möglich, daß der Benachrichtigungs-Server 117 beim Vorliegen einer Nachricht über eine E-mail diese automatisch abholt, ohne daß ihm bisher mitgeteilt wurde, für welchen Arbeitsplatz genau diese E-mail vorliegt. Liegt diese E-mail dann dem Benachrichtigungs-Server 117 vor, so kann er im Adressbereich der E-mail selbst nachlesen, wer der Adressat der E-mail ist und diese an den entsprechenden Arbeitsplatz weiterleiten.

Mit der erfindungsgemäßen Steuer- und Anzeigevorrichtung ist es also nun möglich, dem Adressaten aktiv auf das Vorhandensein einer elektronischen Nachricht hinzuweisen, ohne daß der Adressat selbst aktiv werden muß. Die oben gezeigten Beispiele unter Nutzung des ISDN-Telekommunikationsnetzes können auch auf andere Telekommunikationsnetze übertragen werden, solang diese Netze in der Lage sind digitale Nachrichten zu übertragen.

### Bezugszeichenliste

- 1/1a: Steuer- und Anzeigevorrichtung
- 2: Anzeige für E-mail
- 3: Reset-Taste
- 4: Schallwandler
- 5/6: TAE-Anschlußbuchsen
- 7: Elektrische Anschluß für PC/Drucker/Fax
- 8: Anschlußkabel von TAE-Dose
- 9: Anschlußkabel zum Modem/PC/Telefon
- 10: ISDN-Anschaltung
- 11: Mikroprozessor
- 12: Speicherbaustein
- 13: Stromversorgung
- 14: Chip-Karte
- 14.1: Chip-Karten-Terminal
- 15: Oszillator-Quarz
- 101: Steuer- und Anzeigevorrichtung
- 101.x: Steuer- und Anzeigevorrichtung
- 102: Anzeige
- 102.x: Anzeige
- 103: Tastatur
- 103.x: Tastatur
- 108: Anschlußkabel
- 116: Netzwerkkarte
- 116.x: Netzwerkkarte
- 117: Personal Computer / Arbeitsplatz / Benachrichtigungs-Server
- 117.x: Personal Computer / Arbeitsplatz
- 120: ISDN-Netz
- 120.1: ISDN-So-Anschlußstelle (NTBA)
- 120.2: ISDN-So-Anschlußstelle (NTBA)
- 121: Dial-Server/Wähl-Server
- 122: Mail-Server

## Patentansprüche

1. Vorrichtung zur Anzeige des Vorliegens einer elektronischen Nachricht bei einem Provider, wobei die Vorrichtung aufweist:
1.1 ein Mittel (11,14) zur Speicherung mindestens einer vorgegebenen Kennung eines Providers,
1.2 ein Mittel (11) zum Vergleich der mindestens einen vorgegebenen Kennung mit einer Kennung eines einkommenden Signals,
1.3 ein Mittel (2) zur optischen oder akustischen Anzeige, oder zur Auslösung eines Ereignisses im Falle eines Übereinstimmens der mindestens einen vorgegebenen Kennung und der eingehenden Kennung,
**dadurch gekennzeichnet,** daß
1.4 die Vorrichtung einen Anschluß (8) an ein ISDN-Telekommunikationsnetz mit einem Datenkanal und mindestens einem Nutzkanal aufweist, und
1.5 eine ISDN-Anschaltung (10) mit einem D-Kanal-Kontroller zur Dekodierung der Kennung des Providers im eingehenden Datenkanal vorgesehen ist, wobei außerdem
1.6 Mittel (10,11) zur Unterdrückung einer Anrufsignalisierung vorgesehen sind.

2. Vorrichtung gemäß dem Anspruch 1, **dadurch gekennzeichnet,** daß das Mittel zur Speicherung der mindestens einen Kennung ein elektronischer Speicherbaustein (12) ist.

3. Vorrichtung gemäß einem der Ansprüche 1 - 2, **dadurch gekennzeichnet,** daß ein Mittel zum Einlesen der mindestens einen vorgegebenen Kennung eine austauschbare Chip-Karte (14) mit Terminal (14.1) ist.

4. Vorrichtung gemäß einem der Ansprüche 1 - 3, **dadurch gekennzeichnet,** daß sie Teil eines Personal Computers (117) ist.

5. Vorrichtung gemäß Anspruch 4, **dadurch gekennzeichnet,** daß der Personal Computer (117) Teil eines Netzwerks aus einer Vielzahl von Personal Computern (117.x) ist.

6. Verfahren zur Meldung einer bei einem Provider für einen Adressaten bereitstehenden E-mail über ein Telekommunikationsnetz mit den folgenden Verfahrensschritten:
6.1 anwählen des Adressaten durch den Provider mit einem vorgegebenen Telefonanschluß,
6.2 erkennen des einkommenden Telefonanrufs beim Adressaten,
6.3 bestimmen der Telefonnummer des Anrufenden,
6.4 vergleichen der Telefonnummer des Anrufenden mit einer vorgegebenen Telefonnummer oder Liste von Telefonnummern, und
6.5 betätigen einer elektrischen Schaltung, wenn die anrufende Telefonnummer mit der vorgegebenen Telefonnummer oder einer der Telefonnummern der vorgegebenen Liste übereinstimmt,
**dadurch gekennzeichnet,** daß
6.7 das Telekommunikationsnetz ein ISDN-Netz mit einem Datenkanal und mindestens einem Nutzkanal ist und zur Bestimmung der Telefonnummer des einkommenden Anrufs eine ISDN-Anschaltung mit einem D-Kanal-Kontroller verwendet wird, wobei die Telefonnummer aus dem Datenkanal ausgelesen wird, wobei jedoch gleichzeitig eine Anrufsignalisierung unterdrückt wird.

7. Verfahren gemäß Anspruch 6, **dadurch gekennzeichnet,** daß die vorgegebene(n) Telefonnummer(n) mit Hilfe einer Chip-Karte eingelesen werden.

8. Verfahren gemäß einem der Ansprüche 6 - 7, **dadurch gekennzeichnet,** daß die Betätigung der elektrischen Schaltung durch den Anruf mit einer anderen Telefonnummer zurückgenommen wird.

9. Verfahren gemäß einem der Ansprüche 6 - 8, **dadurch gekennzeichnet,** daß ein Programm in einem Computer aktiviert wird, das eine Sprachtonwiedergabe starten und/oder eine weitere Signalisierung durch Funk oder andere Telematik-Dienste auslösen und/oder eine E-mail an eine vorgegebene Adresse senden kann.

10. Verfahren gemäß dem Anspruch 9, **dadurch gekennzeichnet,** daß das aktivierte Programm einen Netzwerkrundspruch innerhalb eines lokalen Netzwerkes ausführt oder einen Vergleich der eingegangenen Subadresse oder sonstigen Kennung mit einer bestehenden Liste vornimmt und eine Meldung entsprechend der Liste über ein lokales Netz an eine durch die Liste bestimmte Person weiterleitet.

## Claims

1. A device for displaying the presence of electronic news at a provider whereby the device has:
1.1 a means (11, 14) for saving at least one preset identification of a provider,
1.2 a means (11) for comparing the at least one preset identification with an identification of an incoming signal,
1.3 a means (2) for optical or acoustic display, or for triggering an event in the case of a conformance of the at least one preset identification and the incoming identification,
characterised in that
1.4 the device has a connection (8) to an ISDN telecommunications network with one data channel and at least one bearer channel and
1.5 an ISDN connection (10) with a D-channel controller for decoding the identification of the provider is provided in the incoming data channel, whereby in addition
1.6 means (10, 11) for suppressing a call signalling are provided.

2. The device according to Claim 1, characterised in that the means for saving the at least one identification is an electronic memory chip (12).

3. The device according to one of Claims 1 - 2, characterised in that a means for reading in the at least one preset identification is an exchangeable chip card (14) with terminal (14.1).

4. The device according to one of Claims 1 - 3, characterised in that it is part of a personal computer (117).

5. The device according to Claim 4, characterised in that the personal computer (117) is part of a network of a plurality of personal computers (117.x).

6. A method for notifying a waiting E-mail for a consignee at a provider via a telecommunication network with the following process steps:
6.1 selecting the consignee by the provider using a preset telephone connection,
6.2 identifying the incoming telephone call at the consignee,
6.3 determining the telephone number of the caller,
6.4 comparing the telephone number of the caller with a preset telephone number or list of telephone numbers, and
6.5 actuating an electric circuit if the calling telephone number agrees with the preset telephone number or one of the telephone numbers in the preset list,
characterised in that
6.6 the telecommunications network is an ISDN network with a data channel and at least one bearer channel and an ISDN connection with a D-channel controller is used to determine the telephone number of the incoming call whereby the telephone number is read out from the data channel, whereby however a call signalling is suppressed at the same time.

7. The method according to Claim 6, characterised in that the preset telephone number(s) are read in with the aid of a chip card.

8. The method according to Claims 6 - 7, characterised in that the actuation of the electric circuit is cancelled by the call with a different telephone number.

9. The method according to one of Claims 6 - 8, characterised in that a program is activated in a computer which can initiate speech playback and/or trigger another signalling by radio or other telematic service and/or can send an E-mail to a preset address.

10. The method according to Claim 9, characterised in that the activated program carries out a network broadcast within a local network or makes a comparison of the input subaddress or other identification with an existing list and redirects a message according to the list via a local network to a person determined by the list.

## Revendications

1. Procédé de signalement de la présence de courrier électronique sur un serveur, ce dispositif comportant :
1.1. un moyen (11, 14) permettant la mémorisation d'au moins un indicatif déterminé d'un serveur,
1.2. un moyen (11) de comparaison d'au moins un indicatif déterminé avec l'indicatif d'un signal entrant,
1.3. un moyen (2) de signalement optique et acoustique ou de déclenchement d'un événement dans le cas d'une concordance d'au moins un indicatif déterminé avec l'indicatif entrant,
**caractérisé en ce que**
1.4. le dispositif présente un raccordement (8) à un réseau de communications ISDN
avec un canal de données et au moins un canal utile, et
1.5. un branchement ISDN (10) avec un contrôleur de canal de données pour le
décodage de l'indicatif du serveur dans le canal de données entrantes est prévu, alors qu'en outre,
1.6. des moyens (10, 11), de retenir la signalisation des appels sont prévus.

2. Dispositif selon la revendication 1, **caractérisé en ce que** le moyen de mémorisation d'au moins un indicatif est une puce électronique (12).

3. Dispositif selon une des revendications let 2, **caractérisé en ce qu**'un moyen de lecture d'au moins un indicatif déterminé est une carte à puces amovible (14) avec un terminal (14.1).

4. Dispositif selon une des revendications 1 à 3, **caractérisé en ce qu**'il fait partie d'un ordinateur personnel (117).

5. Dispositif selon la revendication 4, **caractérisé en ce que** l'ordinateur personnel (117) fait partie d'un réseau multiple d'ordinateurs personnels (117.x).

6. Procédé de signalement de la présence d'un e-mail pour un destinataire sur le serveur par un réseau de télécommunications en suivant les étapes suivantes :
6.1. choix du destinataire par le serveur avec une liaison téléphonique déterminée,
6.2. reconnaissance de l'appel téléphonique entrant chez le destinataire,
6.3. définition du numéro de téléphone de l'appelant,
6.4. comparaison du numéro de téléphone de l'appelant avec un numéro de téléphone ou une liste de numéros de téléphone définis et
6.5. activation d'un branchement électrique lorsque le numéro de téléphone appelant concorde avec le numéro de téléphone défini ou un des numéros de téléphone de la liste définie,
**caractérisé en ce que**
6.6. le réseau de télécommunications est un réseau ISDN avec un canal de données et au moins un canal utile et qu'un branchement ISDN est utilisé, avec un contrôleur de canal de données, pour la détermination du numéro de téléphone de l'appel entrant, le numéro de téléphone étant lu dans le canal de données, une signalisation d'appel étant toutefois simultanément retenue.

7. Procédé selon la revendication 6, **caractérisé en ce que** le(s) numéro(s) de téléphone est(sont) lu(s) à l'aide d'une carte à puces.

8. Procédé selon une des revendications 6 et 7, **caractérisé en ce que** l'activation du branchement électrique est annulée par l'appel avec un autre numéro de téléphone.

9. Procédé selon une des revendications 6 à 8, **caractérisé en ce qu**'un programme est activé dans un ordinateur, qu'une restitution sonore démarre et/ou qu'une autre signalisation par radio ou autres services télématiques se déclenche et/ou peut envoyer un e-mail à une adresse déterminée.

10. Procédé selon la revendication 9, **caractérisé en ce que** le programme activé fait une consultation du réseau sur le plan local ou une comparaison de la sous-adresse entrée ou d'un autre indicatif avec une liste existante et retransmet un signalement en fonction de la liste par un réseau local à une personne définie grâce à la liste.
